# EUROPÄISCHE PATENTANMELDUNG

(11) **EP 3 702 803 A1**
(43) Veröffentlichungstag der Anmeldung: **02.09.2020**
(21) Anmeldenummer: 20159439.7
(22) Anmeldetag: 26.02.2020
(51) Int. Cl.: G01S 7/481, G01S 7/48, G01S 7/4863, G01S 7/495

(54) **VERFAHREN UND VORRICHTUNG ZUM DETEKTIEREN VON EINFALLENDER LASERSTRAHLUNG AN EINEM RAUMFLUGKÖRPER**

(30) Priorität: 27.02.2019 DE 102019105036
(71) Anmelder: Jena Optronik GmbH, 07745 Jena (DE)
(72) Erfinder: SCHMIDT, Uwe, 07616 Bürgel (DE); HAARLAMMERT, Thorben, 07745 Jena (DE)
(74) Vertreter: Ege Lee & Partner Patentanwälte PartGmbB

(57) **Zusammenfassung**

Verfahren zum Detektieren von einfallender Laserstrahlung an einem Raumflugkörper, wobei eine einfallende Strahlung in mehreren diskreten Spektralbereichen jeweils gesondert erfasst wird, die in den Spektralbereichen erfasste Strahlung in weiterverarbeitbare elektrische Signale umgeformt wird und die Signale gemeinsam ausgewertet werden, und Vorrichtung (200) zum Detektieren von einfallender Laserstrahlung an einem Raumflugkörper, wobei die Vorrichtung zum Durchführen eines derartigen Verfahrens geeignet ist.

## Beschreibung

Die Erfindung betrifft ein Verfahren zum Detektieren von einfallender Laserstrahlung an einem Raumflugkörper. Außerdem betrifft die Erfindung eine Vorrichtung zum Detektieren von einfallender Laserstrahlung an einem Raumflugkörper.

Aus dem Dokument EP 2 682 777 A1 ist ein Verfahren bekannt zur Detektion von gepulster Laserstrahlung mit 2-dimensionaler Auflösung der Einfallsrichtung, wobei zur Detektion ein CCD-Sensor mit einer abbildenden Optik verwendet wird, in einer ersten Signalverarbeitung mit einer Abtastfrequenz von mindestens 5 kHz Einzelbilder erzeugt werden, indem jedes Pixel des CCD-Sensors mit einem Schwellwert verglichen wird und der Pixelwert nur bei Übertreffen des jeweiligen Schwellwerts für die weitere Prozessierung gespeichert wird, in der ersten Signalverarbeitung der Mittelwert oder Spitzenwertaus diesen gespeicherten Pixelwerten eines Einzelbilds pixelweise über mindestens 10 Abtastungen ermittelt wird, das so in der ersten Signalverarbeitung erhaltene Signalbild mit einer Bildfrequenz von 10 Hz bis 500 Hz einer weiteren Bildverarbeitung bereitgestellt wird, in der weiteren Bildverarbeitung aus dem Signalbild das bzw. die die einfallende Laserstrahlung repräsentierenden Signalpixel identifiziert werden, wobei sich die Einfallsrichtung der Laserstrahlung aus der Position der Signalpixel auf dem Signalbild ergibt.

Aus dem Dokument DE 10 2007 024 051 A1 ist eine Vorrichtung bekannt zur Erkennung, Lokalisierung und Verfolgung von Laserstrahlungsquellen mit einem im Bildfeld einer abbildenden Optik strahlungsempfindlichen Detektor und einer mit dem Detektor verbundenen elektronischen Signalauswertung, bei der zwischen der Laserstrahlungsquelle und der Optik ein als Strichgitter ausgebildetes Beugungsgitter angeordnet ist. Außerdem ist aus dem Dokument DE 10 2007 024 051 A1 ein Verfahren bekannt zur Bildverarbeitung der mit einer derartigen Vorrichtung gewonnen Bilder, wobei die Beugungsordnungen des Streifengitters auf dem als flächenhaften Matrizendetektor ausgebildeten Detektor in der Brennebene der Optik abgebildet werden und die mit dem Detektor verbundene elektronische Signalauswertung derart ausgebildet ist, dass zwischen punktförmigen und strichförmigen Leuchtpunkten der Beugungsordnung unterschieden werden kann, wobei das Verfahren folgende Schritte aufweist: Suchen von Einzelpunkten im Gesamtbild gemäß lokaler Kriterien, Suchen von möglichen Partnerpunkten im Bild, die zu einem gemeinsamen Beugungsmuster gehören könnten, lokales Unterscheiden von Punkten 1-ter Ordnung von Punkten 0-ter Ordnung.

Der Erfindung liegt die Aufgabe zugrunde, ein eingangs genanntes Verfahren zu verbessern. Außerdem liegt der Erfindung die Aufgabe zugrunde, eine eingangs genannte Vorrichtung strukturell und/oder funktionell zu verbessern.

Die Aufgabe wird gelöst mit einem Verfahren mit den Merkmalen des Anspruchs 1. Außerdem wird die Aufgabe gelöst mit einer Vorrichtung mit den Merkmalen des Anspruchs 16. Vorteilhafte Ausführungen und/oder Weiterbildungen sind Gegenstand der Unteransprüche.

Das Verfahren kann an einem Raumflugkörper ausgeführt werden. Der Raumflugkörper kann eine Rakete, ein künstlicher Satellit, insbesondere ein Erdsatellit oder Orbiter, eine Raumsonde, eine Raumfähre, ein Raumschiff, ein Raumfahrzeug, eine Raumkapsel oder eine Raumstation sein. Das Verfahren kann im Weltraum ausgeführt werden. Die einfallende Laserstrahlung kann eine von der Erde oder von einem anderen Raumflugkörper auf den Raumflugkörper gerichtete Laserstrahlung sein. Die einfallende Laserstrahlung kann eine in kooperativer oder in feindlicher Absicht auf den Raumflugkörper gerichtete Laserstrahlung sein. Die einfallende Laserstrahlung kann eine Satellite-Laser-Ranging-Laserstrahlung sein. Die einfallende Laserstrahlung kann eine Mess- oder Anmess-Laserstrahlung sein. Die einfallende Laserstrahlung kann eine Laserstrahlung mit vergleichsweise geringer Leistung sein, die vor einer Haupt-Laserstrahlung mit größerer Leistung auf den Raumflugkörper gerichtet wird. Die einfallende Laserstrahlung kann in einem Wellenlängenbereich von ca. 400nm bis ca. 1700nm liegen. Das Detektieren der einfallende Laserstrahlung kann ein örtliches Bestimmen einer zugehörigen Laserquelle, ein Bestimmen einer Wellenlänge der einfallenden Laserstrahlung, ein Bestimmen einer zeitlichen Charakteristik der einfallenden Laserstrahlung, ein Bestimmen einer Laserleistung, ein Prozessieren von detektierten Signalen und/oder ein Bestimmen eines Messzeitpunkts der Laserquelle umfassen.

Die einfallende Strahlung kann die Laserstrahlung und/oder weitere Strahlung aus dem elektromagnetischen Spektrum aufweisen. Die weitere Strahlung kann nichtionisierende Strahlung, insbesondere optische Strahlung, insbesondere Infrarotstrahlung, sichtbare Strahlung und/oder Ultraviolettstrahlung aufweisen. Die weitere Strahlung kann Sonnenlicht und/oder Mondlicht aufweisen.

Die einfallende Strahlung kann kanalisiert werden. Die einfallende Strahlung kann in mehreren gesonderten Kanälen erfasst werden. Die Kanäle können zueinander parallel sein. Die Spektralbereiche und die Kanäle können einander zugeordnet sein. Jedem Spektralbereich kann ein Kanal zugeordnet sein. Jedem Kanal kann ein Spektralbereich zugeordnet sein. Die einfallende Strahlung kann in wenigstens zwei, insbesondere in zwei bis acht, insbesondere in vier, diskreten Spektralbereichen jeweils gesondert erfasst werden. Die einfallende Strahlung kann den Spektralbereichen parallel erfasst werden. Die in den Spektralbereichen erfasste Strahlung kann je Spektralbereich gesondert in weiterverarbeitbare elektrische Signale umgeformt werden. Die in den Spektralbereichen erfasste Strahlung kann den Spektralbereichen parallel in weiterverarbeitbare elektrische Signale umgeformt werden.

Die mehreren diskreten Spektralbereiche können in gesonderten Kanälen erfasst werden. Eine Anzahl von Kanälen kann einer Anzahl von diskreten Spektralbereichen entsprechen. Die in den Spektralbereichen erfasste Strahlung kann in den gesonderten Kanälen in weiterverarbeitbare elektrische Signale umgeformt werden.

Die einfallende Strahlung kann in wenigstens einem schmalbandigen Spektralbereich, insbesondere in zwei schmalbandigen Spektralbereichen, erfasst werden. Der wenigstens eine schmalbandige Spektralbereich kann auf eine spezifisches Laserfrequenz abgestimmt werden. Der wenigstens eine schmalbandige Spektralbereich kann auf eine Wellenlänge von 532nm, 1055nm, 1064nm, 1070nm, 1315nm und/oder 1550nm abgestimmt werden.

Die einfallende Strahlung kann in wenigstens einem breitbandigen Spektralbereich, insbesondere in zwei breitbandigen Spektralbereichen, erfasst werden. Der wenigstens eine breitbandige Spektralbereich kann zur Abdeckung des optischen Spektrums abgestimmt werden. Der wenigstens eine breitbandige Spektralbereich zur Abdeckung eines Wellenlängenbereichs von ca. 400nm bis ca. 1700nm abgestimmt werden.

Die weiterverarbeitbaren elektrischen Signale aus den Spektralbereichen können zusammengeführt werden. Die Signale können strukturell und/oder funktionell gemeinsam ausgewertet werden. Die Signale können zentral ausgewertet, eingelesen, prozessiert, aufbereitet und/oder bereitgestellt werden.

Mithilfe eines Synchronisationssignals können Messzeitpunkte markiert und/oder bereitgestellt werden. Das Synchronisationssignal kann eine internes oder externes Synchronisationssignal sein.

Eine Messrate kann zum Charakterisieren einer gepulsten Laserstrahlung angepasst werden. Die gepulste Laserstrahlung kann bezüglich ihrer zeitlichen Eigenschaften charakterisiert werden. Die Messrate kann beispielsweise auf ca. 10Hz. bis ca. 50Hz, insbesondere ca. 30 Hz, angepasst werden.

Die einfallende Strahlung kann in den Spektralbereichen jeweils gesondert kompensationsgefiltert werden. In jedem Spektralbereich kann ein spezifisch angepasster Filter, wie Spektral- und/oder Transmissionsfilter, appliziert werden. Die Spektral- und/oder Transmissionsfilter können angepasst werden, um Wellenlänge und Laserleistung für die Spektralbereiche bzw. in den Kanälen mit Sensoren gleicher Bauart bestimmen zu können.

Die einfallende Strahlung kann in den Spektralbereichen jeweils auf mehreren Pixeln eines Pixelmatrixdetektors abgebildet werden. Die mehreren Pixel können ein Cluster bilden. Damit kann ein tatsächliches Signal von auf Fehlpixel zurückgehenden fehlerhaften Signalen diskriminiert werden.

Eine gepulste Laserstrahlung kann mithilfe einer asynchronen Laserpulserkennung detektiert werden. Diese asynchrone Laserpulserkennung kann auch als Laser "seespot" - ALPD bezeichnet werden. Eine kontinuierliche Laserstrahlung kann in einem bildgebenden Modus erfasst werden.

Raumfahrtspezifische Störlichtquellen, wie Sonne und/oder Mond, können diskriminiert werden. Das Diskriminieren raumfahrtspezifischer Störlichtquellen kann durch Plausibilität zwischen den Spektralbereichen erreicht werden, wenn Laserquellen nur einen Spektralbereich/Kanal und breitbandige Störlichtquellen mehrere Spektralbereiche/Kanäle anregen.

Ein Thermalhaushalt kann mithilfe von Radiatoren reguliert werden. Die Radiatoren können außenseitig angebracht werden. Die Radiatoren können zu einem Interface thermisch isoliert werden.

Die einfallende Strahlung kann zum gesonderten Erfassen in den Spektralbereichen/Kanälen mithilfe eines Strahlteilermoduls getrennt werden. Die einfallende Strahlung kann dem Strahlteilermodul zugeführt werden. Mithilfe des Strahlteilermoduls kann die einfallende Strahlung in die Spektralbereiche aufgeteilt werden.

Die Vorrichtung kann zur Anordnung an einem Raumflugkörper dienen. Die Vorrichtung kann auch als Laserwarner bezeichnet werden. Die Vorrichtung kann ein einziges Optikmodul aufweisen. Das Optikmodul kann eine Lichtblende zum Reduzieren von Lichtstreuung aufweisen. Das Optikmodul kann ein Objektiv, insbesondere ein Weitwinkelobjektiv, aufweisen. Das Optikmodul kann ein Strahlteilermodul zum Trennen der einfallenden Strahlung in die Spektralbereiche aufweisen. Das Strahlteilermodul kann einen ersten Strahlteiler und zwei zweite Stahlteiler aufweisen.

Die Vorrichtung kann für jeden Spektralbereich wenigstens einen optischen Sensor aufweisen. Der wenigstens eine optische Sensor kann ein Pixeldetektor, insbesondere ein Pixelmatrixdetektor, beispielsweis mit einer Auflösung 1280 x 1024 Pixel, sein. Der wenigstens eine optische Sensor kann ein Infrarotsensor, insbesondere ein SWIR-Sensor, sein. Die Vorrichtung kann eine einzige Auswertvorrichtung zum gemeinsamen Auswerten der Signale aufweisen.

Das Verfahren kann mithilfe eines Kamerasystems zum Detektieren von Laserstrahlen ausgeführt werden, das einen Strahlenteiler und mehrere Detektoren aufweist. Mithilfe der Detektoren kann ein Spektralbereich von ca. 400nm bis ca. 1700nm diskret abdeckbar sein. Das Kamerasystem kann einen ersten Detektor, einen zweiten Detektor, einen dritten Detektor und/oder einen vierten Detektor aufweisen. Der erste Detektor kann den Spektralbereich 532nm, der zweite Detektor kann die Spektralbereiche 1055nm, 1064nm, 1070nm, der dritte Detektor kann den Spektralbereich 1315nm und/oder der vierte Detektor kann den Spektralbereich 1550nm abdecken. Jedem Detektor kann eine Ansteuer- und Ausleseelektronik zugeordnet sein. Das Kamerasystem kann einen Datenprozessor aufweisen. Das Kamerasystem kann ein Dateninterface aufweisen.

Zusammenfassend und mit anderen Worten dargestellt ergibt sich somit durch die Erfindung unter anderem ein Laserwarner-System an Bord von Raumflugkörpern zur Detektion von Laserquellen am Boden sowie im Weltraum.

Ein Abbildungssystem kann spektral breitbandig von NIS ... SWIR ausgelegt werden. Das Abbildungssystem kann eine Optik und einen Detektor aufweisen. Eine Laserwellenlänge (Bereich und/oder Spektrallinie) kann durch eine Aufteilung eines Strahlengangs in Spektralbereiche (-Kanäle) durch einen Strahlteiler bestimmt werden. In einer gemeinsamen Recheneinheit können Spektralkanaldaten eingelesen und prozessiert und Messdaten aufbereitet und bereitgestellt werden. Ein genauer Messzeitpunktes der Laserquelle kann mittels eines internen oder externen Synchronisationssignals markiert und bereitgestellt werden. Eine angepasste MessRate kann zum Charakterisieren von gepulster Laserstrahlung bzgl. ihrer zeitlichen Eigenschaften ausgelegt werden (z.B. 30Hz). Zum Bestimmen einer Wellenlänge (Band und/oder Spektrallinie) und einer Laserleistung mit einem Detektor gleicher Bauart pro Kanal kann ein angepasster Spektral- und Transmissionsfilter pro Kanal appliziert werden. Eine Aufteilung in dedizierte Kanäle ist kostengünstiger als eine klassische breitbandige Spektrometer-Lösung. Die Laserquelle kann in einem weitwinkligen Gesichtsfeld auf einen Pixelmatrixdetektor abgebildet werden in einer Art und Weise, dass eine durch die Optik empfangene Laserleistung auf mehrere Pixel (cluster) abgebildet wird. Diese Eigenschaft der Abbildung kann zur Diskriminierung eines tatsächlichen Signals von Fehlpixeln (white spots) verwendet werden. Zum Detektieren gepulster Laserquellen kann eine Laser-"see-spot"-ALPD-Eigenschaft eines verwendeten Detektors genutzt werden. Eine kontinuierliche Laserstrahlung kann in einem bildgebenden Modus des Detektors erfasst werden. Eine Diskriminierung raumfahrt-spezifischer Störlichtquellen, wie Sonne/Mond, kann durch Plausibilität zwischen den Spektralbereichen erreicht werden, wenn Laserquellen nur einen Kanal und breitbandige Strahler, wie Sonne/Mond, mehrere Kanäle anregen. Zum Regulieren eines Thermalhaushalts können in einer mechanischen Auslegung eines optischen Kopfs Radiatoren an Außenflächen angebracht werden. Der optische Kopf kann damit thermisch isoliert zu einem Satelliteninterface arbeiten.

Mit der Erfindung wird eine Anpassung an spezifische Umweltbedingungen im Weltraum, insbesondere im erdnahen Weltraum, erreicht. Eine breitbandige radiometrische Laser-Charakterisierung wird ermöglicht. Eine quantitative Signal- und Leistungsmessung wird ermöglicht. In einem breitbandigen Bereich von VIS ... NIR ... SWIR (500nm ... 1700nm) können Laserquellen detektiert werden. Ortskoordinaten (Winkel) der Laserquelle können in einem weiten Gesichtsfeld (z.B. +/-60°) bestimmt werden. Eine Wellenlänge einer detektierten Laserquelle (Bereich und /oder Spektrallinie) kann bestimmt werden. Eine zeitliche Lasercharakteristik (kontinuierlich ... gepulst, Pulsfrequenz) kann bestimmt werden. Eine Laserleistung (Radiometrie) kann bestimmt werden. Detektierten Signale können prozessiert werden, eine Lasercharakteristik kann aufbereitet und über ein Dateninterface zu einem übergeordneten System ausgegeben werden. Ein genauer Messzeitpunkts der Laserquelle kann mittels interner oder externer Synchronisation zur Unterstützung der Bestimmung der Orts- und Richtungsanbindung in Präsenz der spezifischen Orbit-Bewegungsdynamik des Raumflugkörpers bestimmt werden.

Es kann ein Detektor eingesetzt werden, der eine Identifikation gepulster Laserstrahlung ermöglicht. Neben einer Auswertung der Laserpulse kann auch eine hohe Intensität der Laser am Ort des Laserwarners als Kriterium herangezogen werden. Durch die Verwendung mehrerer Kanäle, die jeweils einem festen Spektrum des Lichts zugeordnet sein können, kann eine Identifikation von Hintergrundstörlichtquellen (Sonne, Mond) erfolgen. Eine Winkelauflösung kann durch ein bildgebendes Verfahren realisiert werden. Eine spektrale Selektion (Messung der Wellenlänge des Lasers) kann durch dielektrische Filter in einem Strahlteiler erfolgen.

Aufgrund der Verwendung mehrerer spektral selektiver Kanäle, die in einer gemeinsamen elektronischen Einheit ausgewertet werden, können Störlichtquellen, wie zum Beispiel die Sonne oder der Mond, identifiziert und als Laserquelle ausgeschlossen werden. Dies erlaubt die Identifikation von Laserstrahlung anhand der Intensität in Kombination mit ihrer spektralen Schmalbandigkeit (ein Laser wird immer nur in einem Kanal detektiert werden). Zur spektralen Trennung mehrerer Kanäle kann ein Strahlteiler eingesetzt werden. Zur Kompensation einer wellenlängenabhängigen Detektorempfindlichkeit in der Intensitätsmessung in den Spektralbereichen bei Verwendung des gleichen Detektortyps pro Kanal kann ein Kompensationsfilter (Transmissionsfilter + Spektralfilter in einem Filterschichtsystem) eingesetzt werden. Durch diesen Filter kann sichergestellt werden, dass Laserquellen aller Wellenlängen bei gleicher Leistung das gleiche Signalniveau in den Detektorpixeln erzeugen. Dazu können sowohl Effekte in der Lichttransmission (z.B. in einem Objektiv) als auch in der Signalverarbeitung (z.B. Quanteneffizienz des Detektors) ausgeglichen werden. Dieser Filter erlaubt eine deutlich präzisere Leistungsbestimmung der Laserstrahlung als die mit herkömmlichen Systemen möglich ist.

Nachfolgend werden Ausführungsbeispiele der Erfindung unter Bezugnahme auf Figuren näher beschrieben, dabei zeigen schematisch und beispielhaft:
- Fig. 1: ein Laserwarner-Sichtfeld zum Detektieren von einfallender Laserstrahlung an einem Raumflugkörper,
- Fig. 2: einen Laserwarner mit einem einzigen Optikmodul mit einem Strahlteilermodul zum Trennen einfallender Strahlung in vier Spektralbereiche bzw. Kanäle, einem optischen Sensor für jeden Spektralbereich bzw. Kanal und einer einzigen Auswertvorrichtung und
- Fig. 3: einen mechanischen Aufbau eines Laserwarners mit einem einzigen Optikmodul mit einem Strahlteilermodul zum Trennen einfallender Strahlung in vier Spektralbereiche bzw. Kanäle, einem optischen Sensor für jeden Spektralbereich bzw. Kanal und einer einzigen Auswertvorrichtung.

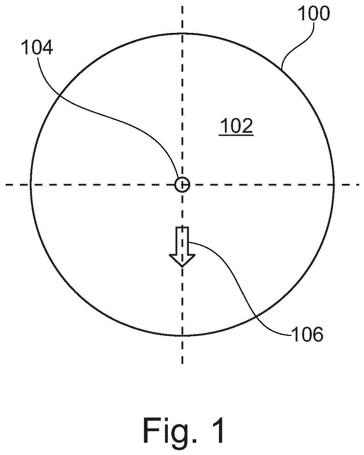

Fig.1 zeigt ein Laserwarner-Sichtfeld 100 zum Detektieren von einfallender Laserstrahlung. Der Laserwarner ist an einem Raumflugkörper, insbesondere an einem Erdsatelliten, angeordnet und dient dazu, von der Erde 102 auf den Raumflugkörper gerichtete Mess- oder Anmess-Laserstrahlung, insbesondere eine in einem Wellenlängenbereich von ca. 400nm bis ca. 1700nm, zu detektieren. Das Laserwarner-Sichtfeld 100 erstreckt sich zumindest annähernd kreisförmig um einen Nadir 104 des Raumflugkörpers und ermöglicht eine 4Pi- bzw. 360°-Überwachung. Eine Flugrichtung des Raumflugkörpers ist mit 106 bezeichnet. Für eine weitere Überwachung können weitere derartige Laserwarner vorgesehen werden, deren Sichtfeld beispielsweise in den Weltraum gerichtet ist.

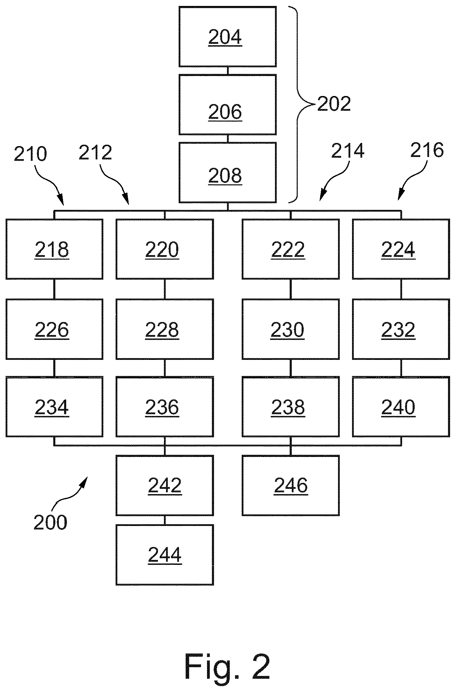

Fig. 2 zeigt einen Laserwarner 200 mit einem einzigen Optikmodul 202 mit einer Lichtblende 204, einer Optik 206 und einem Strahlteilermodul 208. Die Lichtblende 204 dient zum Reduzieren von Lichtstreuung. Die Optik 206 weist ein Weitwinkelobjektiv auf. Das Strahlteilermodul 208 weist einen ersten Stahlteiler und zwei zweite Strahlteiler auf und dient dazu, einfallende Strahlung in vier diskrete Spektralbereiche bzw. Kanäle 210, 212, 214, 216 aufzuteilen. Die einfallende Strahlung weist Strahlung aus dem elektromagnetischen Spektrum, insbesondere nichtionisierende Strahlung, insbesondere optische Strahlung, insbesondere Infrarotstrahlung, sichtbare Strahlung und/oder Ultraviolettstrahlung, beispielsweise Sonnenlicht, Mondlicht und/oder zu detektierende Laserstrahlung, auf. Beispielsweise wird die einfallende Strahlung in zwei breitbandige Spektralbereiche zur Abdeckung des optischen Spektrums mit einem Wellenlängenbereich von ca. 400nm bis ca. 1700nm und in zwei schmalbandige Spektralbereiche zum Detektieren von Laserstrahlung mit den Wellenlängen 532nm, 1055nm, 1064nm, 1070nm, 1315nm und/oder 1550nm aufgeteilt.

Die Kanäle 210, 212, 214, 216 sind spektralbereichsspezifisch abgestimmt. Beispielsweise sind durch ein entsprechendes Filterdesign zwei Kanäle 210, 212 auf die breitbandigen Spektralbereiche zur Abdeckung des optischen Spektrums mit einem Wellenlängenbereich von ca. 400nm bis ca. 1700nm und zwei Kanäle 214, 216 auf die schmalbandigen Spektralbereiche zum Detektieren von Laserstrahlung mit den Wellenlängen 532nm, 1055nm, 1064nm, 1070nm, 1315nm und/oder 1550nm abgestimmt. In den Kanälen 210, 212, 214, 216 wird die aufgeteilte Strahlung über Bandpassfilter 218, 220, 222, 224 Sensoren 226, 228, 230, 232 zugeführt zum gesonderten Erfassen in den Spektralbereichen. Die Bandpassfilter 218, 220, 222, 224 weisen jeweils spektralbereichsspezifisch angepasste Spektral- und/oder Transmissionsfilter zur Kompensation auf, um Sensoren 226, 228, 230, 232 gleicher Bauart zu verwenden. Die Sensoren 226, 228, 230, 232 dienen dazu, die in den Spektralbereichen erfasste Strahlung in weiterverarbeitbare elektrische Signale umzuformen. Beispielsweise werden VIS-SWIR InGaAs Detektoren als Sensoren 226, 228, 230, 232 eingesetzt, die einen erforderlichen Wellenlängenbereich bei einer örtlichen Auflösung von 1280 x 1024 Bildelementen abdecken und bei denen für eine Detektion gepulster Laserstrahlung jedes 2x2 Makropixel über eine spezielle Schaltung verfügt, welche sehr schnelle Lichtsignaländerungen detektiert (ALPD Funktion). Jedem der Sensoren 226, 228, 230, 232 ist eine Ansteuer- und Ausleseelektronik 234, 236, 238, 240 nachgeschaltet.

Der Laserwarner 200 weist eine einzige Auswertvorrichtung 242 zum gemeinsamen Auswerten der Signale der Sensoren 226, 228, 230, 232, eine Signalschnittstelle 244 zur Signalausgabe und eine Stromversorgung 246 auf.

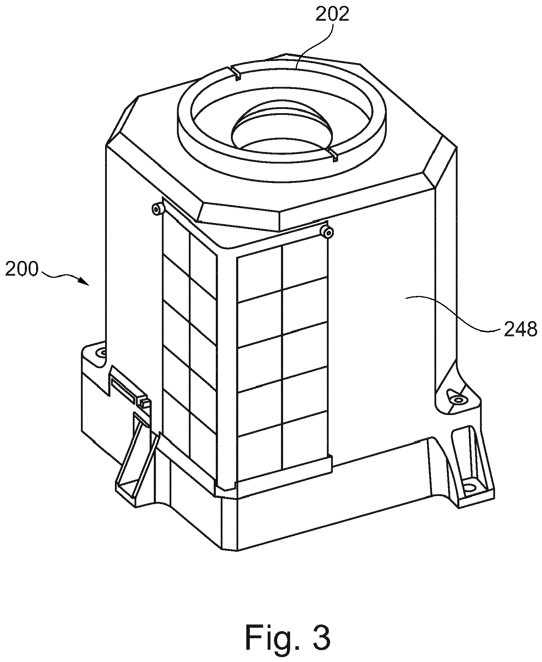

Fig. 3 zeigt einen mechanischen Aufbau des Laserwarners 200 mit dem Optikmodul 202 mit Strahlteilermodul zum Trennen der einfallenden Strahlung in die vier diskreten Spektralbereiche bzw. Kanäle. Eine Außenhülle 248 des Laserwarners 200 ist mit Radiatoren versehen, um einen Wärmehaushalt im Weltraum zu steuern.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Laserwarner-Sichtfeld
- 102: Erde
- 104: Nadir
- 106: Flugrichtung

- 200: Laserwarner
- 202: Optikmodul
- 204: Lichtblende
- 206: Optik
- 208: Strahlteilermodul
- 210: Kanal
- 212: Kanal
- 214: Kanal
- 216: Kanal
- 218: Bandpassfilter
- 220: Bandpassfilter
- 222: Bandpassfilter
- 224: Bandpassfilter
- 226: Sensor
- 228: Sensor
- 230: Sensor
- 232: Sensor
- 234: Ausleseelektronik
- 236: Ausleseelektronik
- 238: Ausleseelektronik
- 240: Ausleseelektronik
- 242: Auswertvorrichtung
- 244: Signalschnittstelle
- 246: Stromversorgung
- 248: Außenhülle

## Patentansprüche

1. Verfahren zum Detektieren von einfallender Laserstrahlung an einem Raumflugkörper, **dadurch gekennzeichnet, dass** eine einfallende Strahlung in mehreren diskreten Spektralbereichen jeweils gesondert erfasst wird, die in den Spektralbereichen erfasste Strahlung in weiterverarbeitbare elektrische Signale umgeformt wird und die Signale gemeinsam ausgewertet werden.

2. Verfahren nach Anspruch 1, **dadurch gekennzeichnet, dass** die einfallende Strahlung in wenigstens einem schmalbandigen und/oder in wenigstens einem breitbandigen Spektralbereich erfasst wird.

3. Verfahren nach Anspruch 2, **dadurch gekennzeichnet, dass** der wenigstens eine schmalbandige Spektralbereich auf eine spezifisches Laserfrequenz abgestimmt wird.

4. Verfahren nach Anspruch 3, **dadurch gekennzeichnet, dass** der wenigstens eine schmalbandige Spektralbereich auf eine Wellenlänge von 532nm, 1055nm, 1064nm, 1070nm, 1315nm und/oder 1550nm abgestimmt wird.

5. Verfahren nach Anspruch 2, **dadurch gekennzeichnet, dass** der wenigstens eine breitbandige Spektralbereich zur Abdeckung des optischen Spektrums abgestimmt wird.

6. Verfahren nach Anspruch 5, **dadurch gekennzeichnet, dass** der wenigstens eine breitbandige Spektralbereich zur Abdeckung eines Wellenlängenbereichs von ca. 400nm bis ca. 1700nm abgestimmt wird.

7. Verfahren nach wenigstens einem der Ansprüche 1 bis 6, **dadurch gekennzeichnet, dass** die Signale zentral eingelesen, prozessiert, aufbereitet und/oder bereitgestellt werden.

8. Verfahren nach wenigstens einem der Ansprüche 1 bis 7, **dadurch gekennzeichnet, dass** mithilfe eines Synchronisationssignals Messzeitpunkte markiert und/oder bereitgestellt werden.

9. Verfahren nach wenigstens einem der Ansprüche 1 bis 8, **dadurch gekennzeichnet, dass** eine Messrate zum Charakterisieren einer gepulsten Laserstrahlung angepasst wird.

10. Verfahren nach wenigstens einem der Ansprüche 1 bis 9, **dadurch gekennzeichnet, dass** die einfallende Strahlung in den Spektralbereichen jeweils gesondert kompensationsgefiltert wird.

11. Verfahren nach wenigstens einem der Ansprüche 1 bis 10, **dadurch gekennzeichnet, dass** die einfallende Strahlung in den Spektralbereichen jeweils auf mehreren Pixeln eines Pixelmatrixdetektors abgebildet wird.

12. Verfahren nach wenigstens einem der Ansprüche 1 bis 11, **dadurch gekennzeichnet, dass** eine gepulste Laserstrahlung mithilfe einer asynchronen Laserpulserkennung detektiert und/oder eine kontinuierliche Laserstrahlung in einem bildgebenden Modus erfasst wird.

13. Verfahren nach wenigstens einem der Ansprüche 1 bis 12, **dadurch gekennzeichnet, dass** raumfahrtspezifische Störlichtquellen diskriminiert werden.

14. Verfahren nach wenigstens einem der Ansprüche 1 bis 13, **dadurch gekennzeichnet, dass** ein Thermalhaushalt mithilfe von Radiatoren reguliert wird.

15. Verfahren nach wenigstens einem der Ansprüche 1 bis 14, **dadurch gekennzeichnet, dass** die einfallende Strahlung zum gesonderten Erfassen in den Spektralbereichen mithilfe eines Strahlteilermoduls (208) getrennt wird.

16. Vorrichtung (200) zum Detektieren von einfallender Laserstrahlung an einem Raumflugkörper, **dadurch gekennzeichnet, dass** die Vorrichtung zum Durchführen eines Verfahrens nach wenigstens einem der Ansprüche 1 bis 15 geeignet ist.

17. Vorrichtung (200) nach Anspruch 16, **dadurch gekennzeichnet, dass** die Vorrichtung (200) ein einziges Optikmodul (202) mit einem Strahlteilermodul (208) zum Trennen der einfallenden Strahlung in die Spektralbereiche, für jeden Spektralbereich wenigstens einen optischen Sensor (226, 228, 230, 230) und eine einzige Auswertvorrichtung (242) zum gemeinsamen Auswerten der Signale aufweist.

18. Vorrichtung (200) nach Anspruch 17, **dadurch gekennzeichnet, dass** das Strahlteilermodul (208) einen ersten Strahlteiler und zwei zweite Stahlteiler aufweist.
